# EUROPEAN PATENT APPLICATION

(11) **EP 2 853 997 A2**
(43) Date of publication of application: **01.04.2015**
(21) Application number: 14184542.0
(22) Date of filing: 12.09.2014
(51) Int. Cl.: G06F 3/042

(54) **Infrared touch screen and touch panel thereof**

(30) Priority: 30.09.2013 CN 201310462619
(71) Applicant: Bosch Automotive Products (Suzhou) Co., Ltd., Jiangsu 215021 (CN)
(72) Inventor: Liu, XinQiang, Suzhou, Jiangsu (CN); Shentu, Jiangang, Suzhou, Jiangsu (CN); Wauer, Karsten, 31079 Sibbesse (DE); Lipfert, Jens, 31174 Ottbergen (DE); Willig, Mathias, 31079 Sibbesse (DE); Kuehn, Peter, 31061 Alfeld (DE); Chen, Grace, Suzhou, Jiangsu (CN); Shi, Ramos, Suzhou, Jiangsu (CN)
(74) Representative: Bee, Joachim

(57) **Abstract**

A touch panel of an infrared touch screen is provided, which comprises a touch portion and a light guide element, wherein the light guide element is formed integrally with the touch portion. The touch panel of the invention, due to its touch portion and its light guide element being integrally formed, has a simple structure and an improved ability of enduring an external force and is not easy to be deformed by the external force. In this way, a precise light transmission path can be ensured, a touch point can be precisely positioned into a location on the touch panel, and mis-operation can be avoided. The infrared touch screen with the touch panel according to the invention provides advantages including a simple structure, better endurance and enabling precise operation.

## Description

### Technical Field

The present invention relates to an infrared touch screen and its touch panel.

### Background Art

A touch screen device is a device which is configured for determining a certain location, calculating an input signal and performing a certain function through a finger, a pen or the like touching a character or an icon displayed on a screen, without using an input device, for example, a mouse.

The touch screen device is classified into a resistance type, a capacity type, an ultrasonic type and an infrared type by the manner of touching the screen which is calculated.

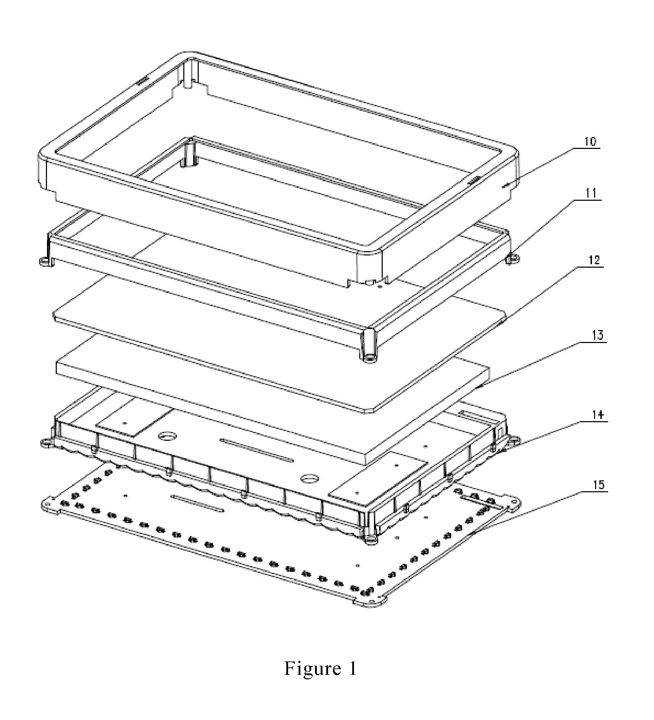

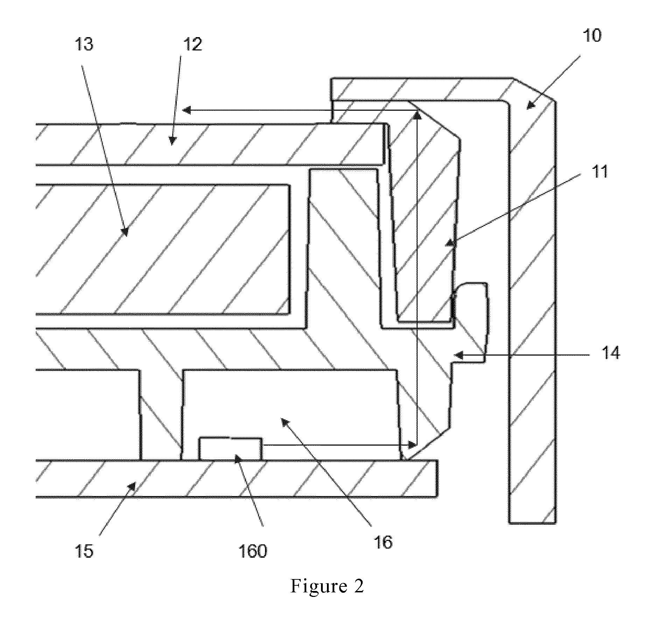

With reference to Figure 1 and Figure 2, in which Figure 1 is an illustrative view of a structure of a conventional infrared touch screen and Figure 2 is a partial cross-sectional view of the conventional infrared touch screen shown in Figure 1 in an assembled state, it can be seen that the infrared touch screen comprises a front frame 10, a light guide element 11, a touch panel 12, a liquid crystal display panel 13, a support member 14, a circuit plate 15, and a housing (not shown).

The light guide element 11 is a rectangular frame constituted of four light guide members, the four light guide members being narrow strip shaped, connected with each other one by one and fitted to the touch panel 12 by adhesive or by other means. The light guide element 11 is fixed with its outer wall on the front frame 10. The liquid crystal display panel 13, the circuit plate 15 and the housing (not shown) are provided under the touch panel 12. The support member 14 is provided between the liquid crystal display panel 13 and the circuit plate 15 to form a cavity 16 in which an infrared tube 160 is provided. The infrared touch screen comprises an infrared receiving portion and an infrared emitting portion, the infrared emitting portion of the infrared touch screen being shown in Figure 2. The infrared tube 160 in the cavity 16 is an infrared emitting tube. The infrared receiving portion is not shown in the drawings and not described herein since it has a similar structure to the infrared emitting portion shown in the drawings except that the infrared tube is an infrared receiving tube.

An infrared ray emitted by the infrared emitting tube 160 is transmitted over a surface of the touch panel 12 after reflected by the support member 14 and the light guide element 11, and then is transmitted into the infrared receiving tube by changing its transmitting direction by reflection. The infrared ray transmitted at a respective location of a touch point is blocked by a finger or the like which touches the screen at the location, and then the location of the touch point on the touch panel is determined by a control system.

Apparently, a proper transmitting path of the infrared ray from the infrared emitting tube to the infrared receiving tube is critical for correctly determining the location of the touch point on the touch panel.

However, due to the fact that the light guide element 11 is formed as a narrow strip and the touch panel 12 is thin, both of them are easy to be deformed when subjected to an external force. The deformed light guide element 11 and the deformed the touch panel 12 cause the transmitting path of the infrared ray to be changed, and the location of the touch point on the touch panel can not be correctly determined, which results in the precision of operating the infrared touch screen to be adversely affected.

In addition, the light guide element 11 is assembled and fixed with the touch panel 12 by adhesive, and thus a high precision is required for the assembling process. The light guide element 11 and the touch panel 12 tend to be detached from each other during transportation if they are not fixed securely together, which shortens the service life of the infrared touch screen.

### Summary of the Invention

An object of the invention is to overcome the above shortcomings of the prior art and to provide an infrared touch screen which has a simple structure and good endurance and enables precise operation and a touch panel of the infrared touch screen.

To this end, according to an aspect of the invention, a touch panel of an infrared touch screen is provided, wherein the touch panel comprises a touch portion and a light guide element, the light guide element being formed integrally with the touch portion.

The light guide element surrounds an edge of the touch portion integrally. The light guide element may comprise a material identical to or different from that of the touch portion. The light guide element and the touch portion comprise a material selected from one or two of: polymethylmethacrylate, polycarbonate, and unsaturated polyoster.

The touch panel of the invention, due to its touch portion and its light guide element being integrally formed, has a simple structure and an improved ability of enduring an external force and is not easy to be deformed by the external force. In this way, a precise light transmission path can be ensured, a touch point can be precisely positioned into a location on the touch panel, and mis-operation can be avoided. Therefore, the infrared touch screen with the touch panel according to the invention provides advantages including a simple structure, better endurance and enabling precise operation.

### Brief Description of the Drawings

The above and other aspects of the invention will be understood completely from the description in combination with the drawings, in which:
Figure 1 is an exploded illustrative view of a structure of a conventional infrared touch screen;
Figure 2 is a partial cross-sectional view of the conventional infrared touch screen shown in Figure 1 in an assembled state; and
Figure 3 is an illustrative view of a touch panel according to a possible embodiment of the invention.

### Detailed Description of Preferred Embodiments

A preferred embodiment of the invention will be described with reference to the drawings.

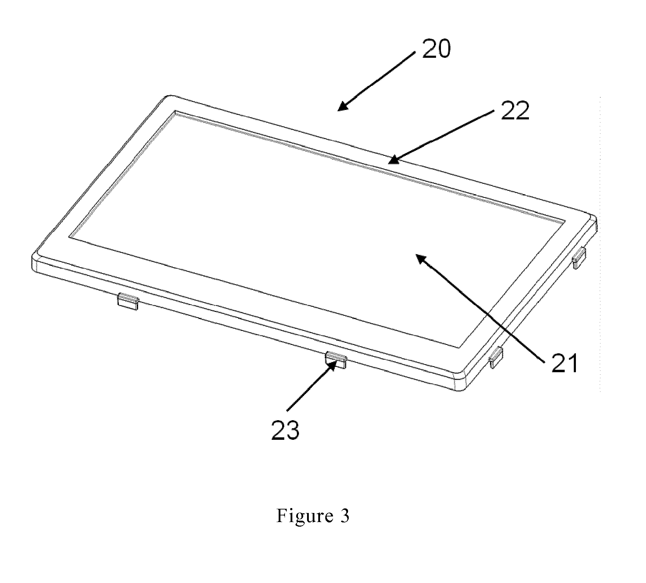

As shown in Figure 3, a touch panel 20 of an infrared touch screen according to a preferred embodiment of the invention is shown, in which the touch panel 20 has a generally rectangular shape and comprises a touch portion 21 and a light guide element 22, the light guide element 22 being formed integrally with the touch portion 21.

In this embodiment, the light guide element 22 entirely surrounds an edge of the touch portion 21. In other embodiments, the light guide element 22 is only partially provided on the edge of the touch portion 2 as desired. Alternatively, according to actual demands, the light guide element 22 entirely surrounds or is only partially provided at another location of the touch portion 21, for example, a lower surface or an upper surface of the touch portion 21.

The light guide element 22 may comprise a material identical to or different from that of the touch portion 21. The materials of the light guide element 22 and of the touch portion 21 are selected from one or two of: polymethylmethacrylate, polycarbonate, acrylic, unsaturated polyester or doped-glass. In this embodiment, the light guide element 22 comprises a material as same as that of the touch portion 21, and they are formed of polymethylmethacrylate integrally.

The touch panel 20 may also be provided with a mating portion 23, and the mating portion 23 is located on the light guide element 22 to be mated with a housing of the infrared touch screen and/or other parts of the infrared touch screen. Figure 3 only shows an example of the mating portion 23, and appropriate variations or changes can be made to the mating portion of the light guide element 22 according to actual demands.

In this embodiment, the touch panel according to the invention has a generally rectangular shape, and appropriate amendments to dimensions and shapes of the light guide element 22 and of the touch portion 21 can be made to be suitable for any type of infrared touch screen according to actual demands.

The touch panel 20 of the invention, due to its touch portion 21 and its light guide element 22 being integrally formed, has a simple structure and an improved ability of enduring an external force and is not easy to be deformed by the external force. In this way, a precise light transmission path can be ensured, a touch point can be precisely positioned into a location on the touch panel, and mis-operation can be avoided. Therefore, the infrared touch screen with the touch panel according to the invention provides advantages including a simple structure, better endurance and enabling precise operation.

Although the invention has been described with reference to the detail embodiments, it is not intended to limit the scope of the invention to the described detail. Various amendments can be made to the details without departing from the basic principle of the invention.

## Claims

1. A touch panel of an infrared touch screen, wherein the touch panel comprises a touch portion and a light guide element, the light guide element being formed integrally with the touch portion.

2. The touch panel of an infrared touch screen according to claim 1, wherein the light guide element is formed integrally at an edge of the touch portion.

3. The touch panel of an infrared touch screen according to claim 1, wherein the light guide element entirely or partially surrounds an edge of the touch portion.

4. The touch panel of an infrared touch screen according to claim 1, wherein the light guide element is provided on a lower surface or an upper surface of the touch portion.

5. The touch panel of an infrared touch screen according to claim 1, wherein the light guide element is made of a material identical to that of the touch portion.

6. The touch panel of an infrared touch screen according to claim 5, wherein the light guide element and the touch portion are made of polymethylmethacrylate

7. The touch panel of an infrared touch screen according to claim 1, wherein the light guide element is made of a material different from that of the touch portion.

8. The touch panel of an infrared touch screen according to claim 1, wherein the light guide element and the touch portion are each made of a material selected from one or more of: polymethylmethacrylate, polycarbonate, acrylic, unsaturated polyester, and doped-glass.

9. The touch panel of an infrared touch screen according to claim 1, wherein the light guide element is provided with a fixing portion which is configured to be fitted to a housing of the infrared touch screen.

10. An infrared touch screen, wherein the infrared touch screen comprises a touch panel according to any one of claims 1-9.
